# EUROPEAN PATENT SPECIFICATION

(11) **EP 0 601 045 B1**
(45) Date of publication and mention of the grant of the patent: **29.03.1995**
(21) Application number: 92918717.7
(22) Date of filing: 04.09.1992
(51) Int. Cl.: B60J 5/04, B60R 19/42, B62D 25/02, B23K 11/20

(54) **INTRUSION BEAM FOR REINFORCING BODY PANELS OF A VEHICLE AND A VEHICLE DOOR PROVIDED WITH SUCH BEAM**
BALKEN ZUM VERSTÄRKEN DER FAHRZEUG-KAROSSERIEWÄNDE UND FAHRZEUG AUSGERÜSTET MIT SOLCHEM BALKEN
TRAVERSE SERVANT A RENFORCER LES PANNEAUX LATERAUX D'UN VEHICULE AFIN D'EN EMPECHER LA DEFORMATION VERS L'INTERIEUR EN CAS DE CHOC ET PORTIERES DE VEHICULE COMPORTANT LADITE TRAVERSE

(30) Priority: 06.09.1991 NO 913527
(43) Date of publication of application: 15.06.1994
(73) Proprietor: Norsk Hydro a.s., 0257 Oslo 2 (NO)
(72) Inventor: CLAUSEN, Edvin, List, DK-6270 Tonder (DK); HAPPIAN-SMITH, Julian, Madeley, Near Crewe CW3 9DX (GB)
(74) Representative: Bleukx, Luc
(86) International application number: PCT/NO92/00141
(87) International publication number: WO 93/04886

(56) References cited:
- EP-A- 0 081 615
- WO-A-90/02680
- DE-A- 1 480 089
- DE-A- 3 806 724
- US-A- 3 664 816

## Description

The present invention relates to means for reinforcing passenger vehicle side doors and walls to protect the occupants against intrusion resulting from side impact, and more particularly to a reinforcing intrusion beam and vehicle door provided with such beam.

Various means for reinforcing automobile doors, generally in the form of beams connected between the front and rear of the door, are presently provided to add strength to the door in the case of side collision. Considerations are given to the dimensions, material choice, configuration and position of the beams in order to provide maximum protection against the side impact forces. Provision of weakened points in the reinforcing beam to prevent undesirable fragmentation of the beam under impact is also known, e.g. from US-A-4,919,473, and so is the provision of partly removed flanges and folding of the remaining flange portions of the beam connected to the door frame to reduce the risk of passenger injury - EP-A-0 407 372.

However, known solutions to the problem of providing a reinforcing beam being capable of sustaining sufficient forces and at the same time ensuring an adequate connection for efficient stiffening of the whole door structure have so far been little effective or complicated. This applies especially when different materials for the door structure and the intrusion beam are used, something which requires local reinforcing of the door frame in the connection area or general increase in the wall thickness of the applied plate material in the door (body panel) representing current technology in this particular field.

Consequently, it is an object of the present invention to provide a novel door construction eliminating the above drawbacks connected to the prior art in this field resulting in a door with improved means for transmitting impact forces to the door frame.

Another object of the invention is to provide an intrusion beam ensuring maximum protection for the passengers against side impact forces, while simultaneously stiffening the door construction in general by transmitting forces in the case of frontal collision from the front part to the middle/rear part of the door frame and space frame posts.

Still another object is to provide a light metal intrusion beam which can simply be spot welded to a door structure made of steel.

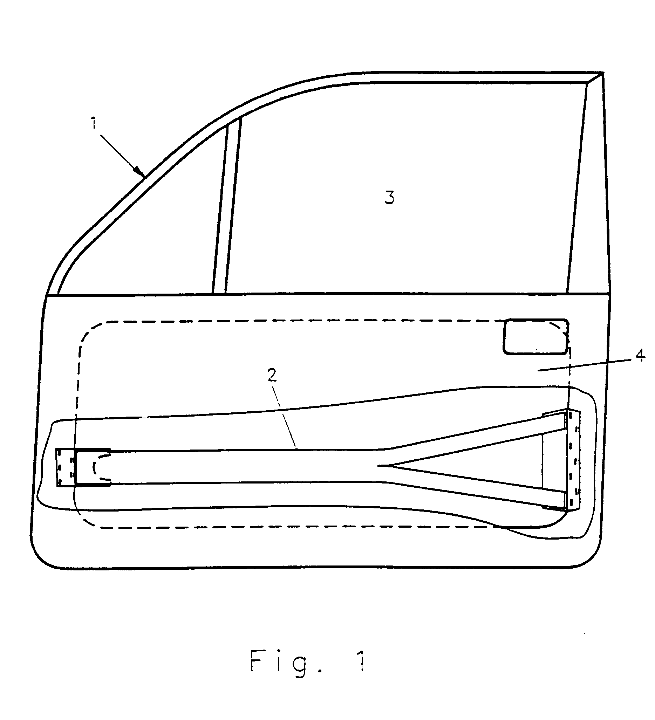

In accordance with the present invention a novel reinforcing intrusion beam of the type disclosed e.g. in US-A-4,919,473 or EP-A-0 407 372 are provided as it appears from the accompanying patent claims 1-4 and the following description of the preferred embodiment of the beam in conjunction with the accompanying drawings, Figures 1-3, where
Fig. 1 is a schematical and partially fragmentary view of the vehicle side door illustrating an incorporated reinforcing beam,
Fig. 2 illustrates schematically in a perspective view the reinforcing beam,
Fig. 3 illustrates in a cross-sectional view taken along line I-I in Fig. 2 two alternative design configurations of the beam (Fig. 3a and Fig. 3b, respectively).

Referring to Fig. 1 showing schematically a vehicle side door 1 comprising an outer side plate (body panel) 4, a window 3 and a reinforcing intrusion beam 2 extending horizontally between and fastened to the front and rear door frames. The intrusion beam is customarily situated at a level (height) corresponding to the front bumper arrangement of the vehicle where is the greatest possibility of impact.

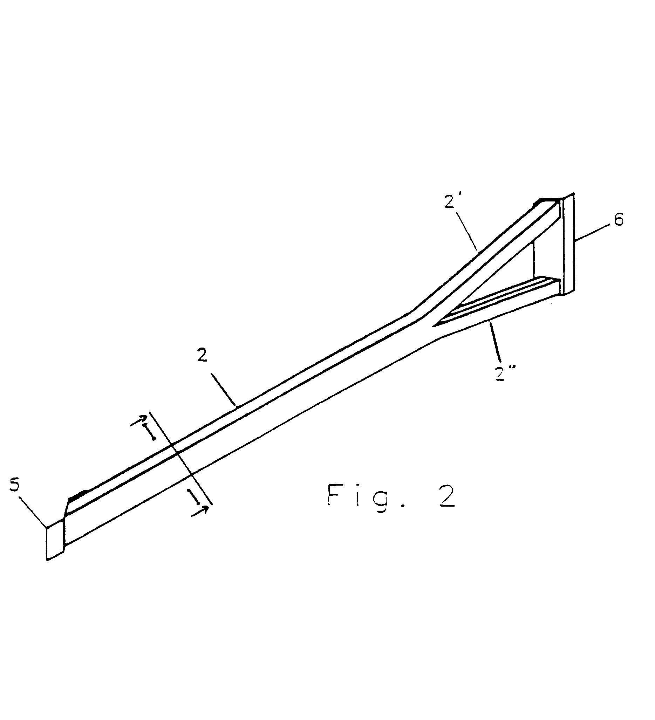

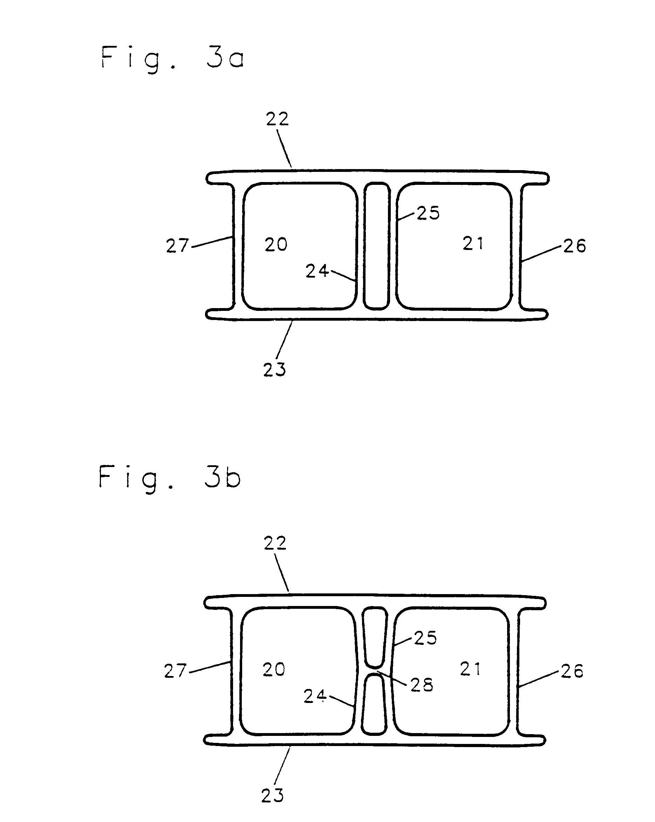

The specific configuration of the applied beam and the way of its connecting to the door frame will be more apparent from Figures 2 and 3 illustrating schematically the reinforcing beam in a perspective view (Fig. 2) and as cross-sectional views (Fig. 3) taken along line I-I in Fig. 2.

As illustrated in Fig. 2, the beam 2 is provided as an elongated shape extruded in e.g. aluminium or its alloy being longitudinally split from one side into two branches 2',2" and bent so that the branches extend at an acute angle in relation to the main longitudinal axis of the beam. Both ends of the shape (the unitary and the split one) are provided with connecting members 5,6 consisting of bimetal AIFe plates fastened by means of welding to the beam (AI-part against AI (AI-alloy)). Provision of bimetal connecting place facilitates greatly the following assembly of the construction allowing for a simple spot welding operation in order to fasten the beam to the door frame (posts). Thus, thanks to the partial split of the beam the maximum load under side impact is distributed over a larger area of the door frame.

Referring to Fig. 3a the beam 2 shown in a cross-section as an extruded hollow shape defined by a pair of parallel side walls 22,23 and transversally extending outer walls 26,27 comprises two parallel extending chambers 20,21 separated from each other by means of two adjacent transversal walls 24,25. The provision of two adjacent dividing transversal walls defining a closed cavity between the chambers 20,21 allows for the above described partial longitudinal split of the extruded shape into branches 2',2", each branch consisting of a closed box section comprising a single chamber.

In a preferred embodiment of the intrusion beam according to the present invention, as illustrated in Fig. 3b in a cross-sectional view, the individual adjacent transversal walls 24,25 are interconnected by a supporting wall 28. The supporting wall 28 has a beneficial influence on the beams' strength (stability) thus compensating for design deviation from the most optimal cross-sectional configuration for this purpose - a single chamber shape. Furthermore, the dividing portion of the shape between two adjacent chambers 20,21 delimited by the transversal walls 24,25 interconnected by the supporting wall 28 has substantially an X-like shape rather than an H-like shape. This is achieved by extruding the adjacent transversal walls 24,25 slightly concave compared to the substantially parallel extension of the remaining outer transversal walls 26,27. Mechanical tests conducted on these particularly configurated transversal walls of the shape show that up to 80% higher loads can be applied before collapse occurred compared to the H-shaped beam.

A special advantage of providing the intrusion beam with partial side split is that the maximum load under side impact is distributed over a larger area of the door frame instead of the present point load (stress) resulting from commercially known constructions.

Furthermore, besides already mentioned savings resulting from the simplified, low costs and more speedy assembling of the door structure, there is also a substantial increase in the overall stiffness of the structure thanks to the exchange of the present bolted or screw connection to the welded connections between the beam and the door frame.

The scope of the present invention is not limited to the above illustrated and described specific embodiments of the invention. Modifications may be made to the invention without departing from the fundamental inventive principle. Thus, e.g. other materials than aluminium and its alloys can be applied, e.g. light metal composites based on AI or Mg metal matrix, and other cross-sectional configurations of the extruded beam than the shown substantially rectangular one, could also be actual.

## Claims

1. Intrusion beam for reinforcing body panels of a vehicle, in particular a beam for protection of occupants in passenger vehicles against side collision impact,
characterized in that
the beam (2) provided as an extruded elongated hollow multichamber shape comprising at least two parallel chambers (20,21) extending along the beam is longitudinally split over a predetermined distance at least from one side of the shape into individual branches (2',2") comprising each one of these chambers (20,21) and where at least one of the individual branches (2',2") is extending at an acute angle in relation to the longitudinal axis of the beam (2) and diverging from each other so that the maximum load under side impact is distributed over a larger area of the vehicle door frame.

2. Intrusion beam according to claim 1,
characterized in that
the beam (2) has a substantially rectangular cross-sectional body configuration and where the chambers (20,21) are defined by two parallel side walls (22,23), a pair of outer transversal walls (26,27) and two adjacent inner transversal walls (24,25) forming a closed cavity between the chambers (20,21).

3. Intrusion beam according to claim 2,
characterized in that
the adjacent transversal walls (24,25) are interconnected by means of at least one supporting wall (28).

4. Intrusion beam according to claim 2 or 3,
characterized in that
the adjacent transversal walls (24,25) exhibit a slightly concave configuration in relation to the substantially parallelly extending outer transversal walls (26,27).

## Patentansprüche

1. Eindrücksicherungsträger zum Verstärken einer Karosseriewand eines Fahrzeuges, insbesondere Träger zum Schützen der Insassen in Personenfahrzeugen gegen einen Seitenaufprall bei einer Kollision, dadurch gekennzeichnet, daß der als ein extrudierter längsgestreckter Hohlprofilformkörper mit mehreren Kammern vorgesehene Träger (2) mindestens zwei parallele Kammern (20,21) aufweist, die sich in Längsrichtung des Trägers erstrecken, und daß er in der Längsrichtung über eine vorherbestimmte Strecke mindestens von einer Seite des Formkörpers ausgehend in zwei einzelne Abzweigungen (2', 2") aufgespalten ist, welche jede eine dieser beiden Kammern (20, 21) umfaßt und wobei mindestens eine der einzelnen Abzweigungen (2', 2") sich in einem spitzen Winkel zu der Längsachse des Trägers (2) erstreckt und die eine so von der anderen auseinanderweicht, daß die maximale Last eines Seitenaufpralles über einen größeren Bereich des Türrahmens verteilt wird.

2. Eindrücksicherungsträger nach Patentanspruch 1, dadurch gekennzeichnet, daß der Träger (2) eine im Querschnitt im wesentlichen rechteckige Körperkonfiguration aufweist und daß die Kammern (20, 21) von zwei parallelen Seitenwänden (22, 23), einem Paar transversalen Außenwänden (26, 27) und zwei nebeneinander liegenden inneren Querwanden (24, 25) begrenzt sind und einen geschlossenen Hohlraum zwischen den Kammern (20, 21) bilden.

3. Eindrücksicherungsträger nach Patentanspruch 2, dadurch gekennzeichnet, daß die nebeneinander liegenden Querwände (24, 25) durch mindestens einen stützenden Steg (28) untereinander verbunden sind.

4. Eindrücksicherungsträger nach Patentanspruch 2 oder 3, dadurch gekennzeichnet, daß die nebeneinander liegenden Querwände (24, 25) eine leicht konkave Konfiguration aufweisen, dies im Vergleich zu den im wesentlichen parallel verlaufenden transversalen Außenwänden (26, 27).

## Revendications

1. Poutrelle anti-intrusion pour renforcer des panneaux de carrosserie d'un véhicule, en particulier poutrelle pour la protection des occupants de véhicules de passagers contre un impact par collision latérale, caractérisée en ce que la poutrelle (2), qui se présente sous la forme d'une pièce façonnée creuse allongée extrudée à plusieurs chambres comprenant au moins deux chambres parallèles (20, 21) s'étendant le long de la poutrelle, est scindée longitudinalement sur une distance prédéterminée, au moins sur un côté de la pièce, en branches individuelles (2', 2") comprenant chacune une de ces chambres (20, 21) et au moins l'une des branches individuelles (2', 2") forme un angle aigu par rapport à l'axe longitudinal de la poutrelle (2) et les deux branches divergent l'une de l'autre de telle sorte que la charge maximum en cas d'impact latéral soit répartie sur une plus grande surface du châssis de la porte du véhicule.

2. Poutrelle anti-intrusion selon la revendication 1, caractérisée en ce que la poutrelle (2) a une configuration en coupe transversale sensiblement rectangulaire et les chambres (20, 21) sont définies par deux parois latérales parallèles (22, 23), une paire de parois transversales externes (26, 27) et deux parois transversales internes voisines (24, 25) formant une cavité fermée entre les chambres (20, 21).

3. Poutrelle anti-intrusion selon la revendication 2, caractérisée en ce que les parois transversales voisines (24, 25) sont interconnectées par au moins une paroi de support (28).

4. Poutrelle anti-intrusion selon la revendication 2 ou 3, caractérisée en ce que les parois transversales voisines (24, 25) présentent une configuration légèrement concave par rapport aux parois transversales externes (26, 27) qui s'étendent sensiblement parallèlement.
